Europäisches Patentamt

European Patent Office

Office européen des brevets

(19)

(11) Publication number: **0 005 931**
**B1**

(12) **EUROPEAN PATENT SPECIFICATION**

(45) Date of publication of patent specification: **03.02.82**

(51) Int. Cl.³: **F 16 K 17/40, F 16 J 13/00**

(21) Application number: **79300833.5**

(22) Date of filing: **15.05.79**

(54) **Safety device for pressure vessels.**

(30) Priority: **25.05.78 GB 2260778**

(43) Date of publication of application:
**12.12.79 Bulletin 79/25**

(45) Publication of the grant of the European patent:
**03.02.82 Bulletin 82/5**

(84) Designated Contracting States:
**AT BE CH DE FR GB IT LU NL SE**

(56) References cited:
**GB - A - 1 367 229**
**US - A - 3 294 277**
**US - A - 3 834 580**
**US - A - 3 834 581**
**US - A - 3 934 602**
**US - A - 4 072 160**

(73) Proprietor: **ELECTROFABRICATION &**
**ENGINEERING COMPANY LIMITED**
**Gloucester Road West Chirton Industrial Estate**
**North Shields Tyne & Wear, NE29 8RQ (GB)**

(72) Inventor: **Falconer, John David**
**1, Heathfield Place Melton Park**
**Gosforth Newcastle upon Tyne (GB)**
Inventor: **Proudlock, George Taylor**
**5 South Parade**
**Choppington Northumberland (GB)**
Inventor: **Monsen, Geoffrey**
**18B Kirton Park Terrace**
**North Shields Tyne & Wear (GB)**

(74) Representative: **Gura, Henry Alan et al,**
**MEWBURN ELLIS & CO. 70 & 72 Chancery Lane**
**London WC2A 1AD (GB)**

Courier Press, Leamington Spa, England.

Safety device for pressure vessels

Technical field

This invention relates to safety devices for pressure vessels, particularly to such devices incorporating reverse buckling discs.

Background art

A reverse buckling disc comprises a concave-convex dome portion surrounded by an annular or substantially annular flange portion, and it is established practice to utilise such a disc in conjunction with one or more knife blades to release excessive pressure that may build up inside an associated vessel.

In such an arrangement, the flange portion of the disc is commonly securely clamped between a pair of opposed support means with the convex side of the dome portion facing the pressure vessel, the or each knife blade being located to the concave side of the dome portion of the disc. When a critical pressure is reached in the vessel, the dome portion reverses into contact with the knife blades which rupture the dome portion and cut it into segments so that the pressure within the vessel is relieved.

With certain pressures and size combinations, and particularly at high pressures, the segments formed by the knife blades on reversal of discs of the above type have a pronounced tendency to tear along a line defined by the innermost edge of the outlet support means, which line corresponds with the intersection between the dome portion and the flange portion of the disc.

Clearly such tearing can result in loose pieces of metal flying about in the outlet bore, leading to many consequential problems.

One proposal to solve this problem, disclosed in, for example, U.S. Patent Specification No. 3,294,277, is to provide the annular outlet member of the disc supporting means with a rounded shoulder which projects radially inwardly of the bore through the inlet member of said means—i.e. radially inwardly of the bore to be monitored. With such an arrangement, and on reversal of the dome portion of the disc, the presence of said shoulder prevents the undesired tearing of the segments formed by the knife blades.

An alternative solution to this problem is disclosed in US Patent Specification No. 3,834,580 in which a support ring is provided between the reverse buckling disc and the annular outlet member to overlie and support the radially outer regions of the dome portion whilst leaving the scored central regions of the dome portion unsupported. On reversal, the dome portion reverses itself from the centre outwardly and tears along the lines of weakness created by the scores in the dome portion to achieve opening without fragmentation.

Disclosure of the invention

The object of the present invention is to provide an improved safety device in which the segments of the dome portion formed on reversal are prevented from tearing away from the flange portion of the disc and in a manner which enables economic manufacture of an accurately-dimensioned disc with improved handleability.

Towards the fulfillment of these and other objects, the safety device of the present invention comprises a reverse buckling disc including a concave-convex dome portion surrounded by an annular or substantially annular flange portion, said flange portion being clamped between annular inlet and outlet support means with the convex side of said dome portion to be subjected to pressure within the vessel, the outlet support means including a ring member the internal diameter of which is less than the internal diameter of the flange portion of the disc whereby an annular portion of the ring member overlies the radially outer regions of the dome portion of the disc, said annular portion of the ring member being so located that, during reversal of the dome portion of the disc, the movement of the reversing radially outer regions of said dome portion is retarded by said annular portion of the ring member, characterised in that said annular portion of the ring member is deformable such that, during said reversal of the dome portion, said annular portion of the ring member is itself displaced by the dome portion from a rest position to a deformed position.

The deformable annular portion of the ring member acts as a buffer to the dome portion of the disc during reversal thereof thereby retarding the movement of the disc portion and preventing tearing of the reversed dome portion from the clamped flange portion.

Preferably the outer support means includes an outlet support member, the ring member being located between said outlet support member and the flange portion of the disc. Conveniently said ring member is secured, for example by spot-welding or rivetting, to the flange portion of the disc.

Alternatively the outlet support means may include an outlet support member and an outlet support ring located between said support member and the flange portion of the disc, the ring member being located between the outlet support ring and the flange portion of the disc or between the outlet support member and the outlet support ring. In both cases it is preferred that the ring member and outlet support ring are secured together and to the flange portion of the disc, for example by spot-welding or rivetting.

Conveniently the outlet support member includes a plurality of knife blades for rupturing the dome portion of the disc on reversal, in which case the outlet support means may further include a holder member for locating the outlet support member in position within the device.

In all embodiments of the invention it is preferred that the inlet support means includes an inlet support ring secured, for example by spot-welding or rivetting, to the flange portion of the disc, the internal diameters of the inlet means, the flange portion of the disc and the assembled outlet means, other than the ring member, being identical.

The ring member may be made of the same material as the reverse buckling disc, the thickness of said ring member being chosen dependent upon the thickness of the disc and the pressure to be monitored. In most applications of the invention, such a ring member will be of a thickness typically $\frac{1}{4}$ to equal that of the disc.

In an alternative arrangement, the ring member may be made of a material different from that of the disc and conveniently softer than the material of the disc. In such a case the thickness of the ring member will again be chosen to suit particular requirements and may be greater than that of the disc.

Brief description of the drawings

Fig. 1 is a vertical section through a safety device according to the invention clamped between a pair of pipe flanges;

Fig. 2 shows in detail part of the safety device of Fig. 1;

Figs. 3 and 4 show alternative arrangements for the part of the safety device shown in Fig. 2, and

Fig. 5 shows the part of the safety device of Fig. 2 with the disc having undergone reversal.

Best mode of carrying out the invention

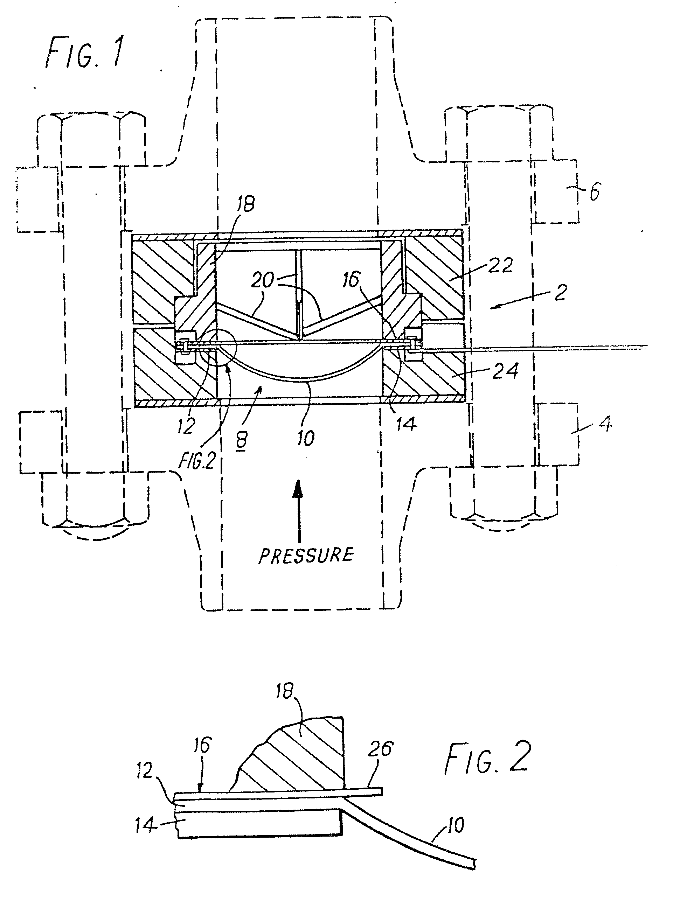

Referring to Fig. 1, the safety device is indicated generally at 2 and is clamped in position between inlet and outlet pipe flanges 4, 6 respectively, the pipe flange 4 being secured to a vessel (not shown) the pressure in which is applied to the device.

The device 2 comprises a stainless steel reverse buckling disc indicated generally at 8 and including a concave-convex dome portion 10 surrounded by an annular flange portion 12, the convex side of the dome portion 10 being subjected to the pressure in the vessel. An inlet support ring 14 is rivetted or spot-welded to the inlet side of the flange 12, the internal diameter of said ring 14 being identical with the internal diameter of the flange 12.

The device 2 further comprises a stainless steel ring member 16 rivetted or spot-welded to the outlet side of the flange 12, the internal diameter of said ring member 16 being less than that of the flange 12 and ring 14 and the thickness of said ring member 16, in the embodiment illustrated in Figs. 1 and 2, being less than that of the material of the disc 8. Said ring member 16 forms part of outlet support means for the disc 8, said outlet support means further including a support member which comprises a knife blade ring 18 the internal diameter of which is identical with that of the flange 12, said ring 18 carrying three equispaced knife blades 20, and an outlet holder member 22 for locating the ring 18 in position within the device.

Inlet support means for the disc comprise, along with the support ring 14, an inlet holder 24 the internal diameter of which matches that of said ring 14.

Thus the disc 8 along with the inlet support ring 14 and ring member 16 secured thereto comprise a unit which, on assembly of the device, is located on the inlet holder member 24.

The provision of such an integral unit has a number of advantages in that it not only facilitates location of the disc in the assembly but it also facilitates manufacture of an accurately dimensioned disc (the dome portion is hydraulically blown through the previously attached inlet support ring), and improves the handleability of the disc. Once this unit has been so located, the ring 18 and knife blades 20 carried thereby are positioned in the device which is then completed by the outlet holder member 22.

In the assembled device, the leading edge of the knife blade unit is substantially in the plane passing through the mating faces of the flange 12 and ring member 16, while the ring member 16 includes a flat annular portion 26 which overlies the radially outer regions of the dome portion 10 of the disc 8 as clearly seen in Fig. 2.

When the pressure in the associated vessel reaches the critical value, the dome portion 10 of the disc 8 reverses and is instantly ruptured and cut into three equal segments by the knife blades 20. More particularly, during reversal, the fast-moving dome portion 10 contacts the portion 26 of the ring member 16 over a region approximately level with the interface between the ring member 16 and the flange portion 12 of the disc. The energy of the reversing dome portion 10, in combination with the energy release by the overpressurised system, forces the dome portion 10 against the knife blades 20 with the result that said dome portion is cut. The three segments of the cut dome portion pass completely between the associated knife blades hinging about an axis formed by the internal edge of the ring 18. During this reversal, the overlying portion 26 of the ring member 16 absorbs energy from the moving dome portion 10 and retards said movement of the dome portion, said overlying portion 26 at the same time being deformed into the radiussed shape shown in Fig. 5. The inherent properties of the overlying portion of the ring member 16—in particular the thickness and strength of the material of said portion 26 in relation to the thickness and material of the disc 8 and the reversal pressure of the vessel—can be chosen such as to eliminate completely tearing of the segments of the dome portion 10 along their intersection with the flange 12 as would otherwise occur.

Figs. 2 and 5 illustrate a safety device adapted to seat in a 89 mm bore, the associated vessel having a critical reversal pressure of 26 kgs/cm². The disc 8 is of stainless steel 0.38 mm thick, while the ring member 16 is also of stainless steel but of thickness 0.25 mm and has an internal diameter of 83 mm thus providing an overlying portion 26 3 mm wide.

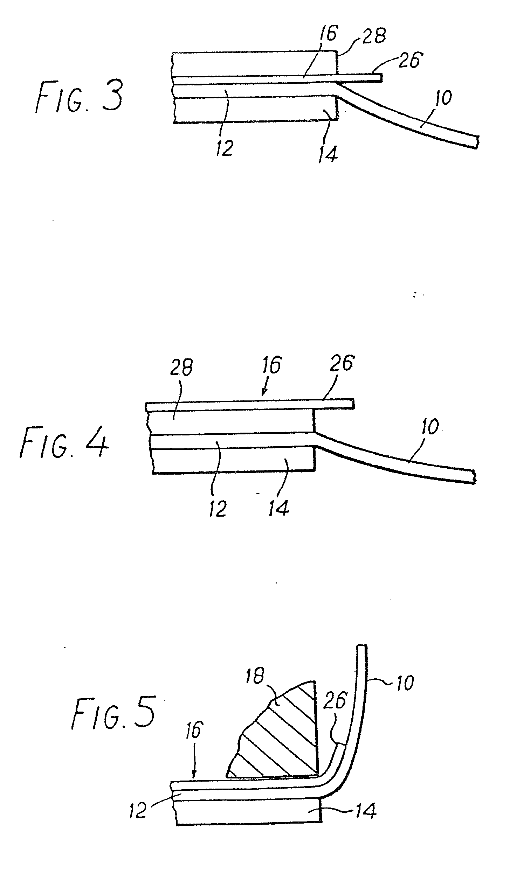

Fig. 3 illustrates an arrangement in which the outlet means further comprise an outlet support ring 28, said ring 28 together with the disc 8, ring member 16 and inlet support ring 14 comprising an integral construction.

With a device incorporating the arrangement of Fig. 3 located in its operative position, the knife blade ring 18 thereof abuts the outlet support ring 28.

In the arrangement of Fig. 4, an outlet support ring 28 is again provided but said ring is located between the flange portion 12 of the disc 8 and the annular ring member 16. Again the components 8, 14, 16, and 28 comprise a unitary construction. It will be appreciated that the ring member 16 of Fig. 4 is axially displaced from the plane of the outlet side of the flange portion 12 of the disc 8, but the effect of the overlying portion 26 of said member 16 on the reversing dome portion 10 can readily be arranged to be the same as that of the portions 26 shown in Figs. 1, 2, 3 and 5.

Thus, selection of the correct combination of design parameters of the disc 8 and ring member 16 for a given application of a device according to the invention results in a reverse buckling disc with accurate pressure response and provides a system which, after reversal of the dome portion 10, has maximum flow potential and no loose dome portion pieces therein.

Although the illustrated, exemplary arrangements all show devices incorporating one or more support rings 14, 28, with the disc 8, ring member 16 and the or each support ring 14, 28 secured together, it is to be emphasised that the invention includes within its scope a safety device incporating no support rings as such and in which the ring member is separate from the disc—such a device could include an inlet member 24, a disc 10, a ring member 16 separate from the disc 10, and an outlet member housing fixed knife blades, the ring member 16 being clamped between the outlet member and the flange of the disc.

## Claims

1. A safety device for a pressure vessel, said device comprising a reverse buckling disc (8) including a concave-convex dome portion (10) surrounded by an annular or substantially annular flange portion (12), said flange portion (12) being clamped between annular inlet and outlet support means (14, 24 and 18, 22, 28) with the convex side of said dome portion to be subjected to pressure within the vessel, the outlet support means including a ring member (16) the internal diameter of which is less than the internal diameter of the flange portion (12) of the disc (8) whereby an annular portion (26) of the ring member (16) overlies the radially outer regions of the dome portion (10) of the disc (8), said annular portion (26) of the ring member (16) being so located that, during reversal of the dome portion (10) of the disc (8), the movement of the reversing radially outer regions of said dome portion (10) is retarded by said annular portion (26) of the ring member (16), characterised in that said annular portion (26) of the ring member is deformable such that, during said reversal of the dome portion (10), said annular portion (26) of the ring member (16) is itself displaced by the dome portion (10) from a rest portion to a deformed position.

2. A safety device as claimed in Claim 1 in which the outlet support means (18, 22, 28) includes an outlet support member (18), the ring member (16) being located between said outlet support member (18) and the flange portion (12) of the disc (8).

3. A safety device as claimed in Claim 2 in which the ring member (16) is secured to the flange portion (12) of the disc (8).

4. A safety device as claimed in Claim 1 in which the outlet support means (18, 22, 28) includes an outlet support member (18) and an outlet support ring (28) located between said support member (18) and the flange portion (12) of the disc (8), the ring member (16) being located between the outlet support ring (28) and the flange portion (12) of the disc (8).

5. A safety device as claimed in Claim 1 in which the outlet support means (18, 22, 28) includes an outlet support member (18) and an outlet support ring (28) located between said support member (18) and the flange portion (12) of the disc (8), the ring member (16) being located between the outlet support member (18) and the outlet support ring (28).

6. A safety device as claimed in Claim 4 or Claim 5 in which the ring member (16) and the outlet support ring (28) are secured together and to the flange portion (12) of the disc (8).

7. A safety device as claimed in any one of Claims 2 to 6 in which the outlet support member (18) includes a plurality of knife blades (20) for rupturing the dome portion (10) of the disc (8) on reversal.

8. A safety device as claimed in Claim 7 in which the outlet support means (18, 22, 28) further includes an annular holder member (22) for locating the outlet support member (18) in position within the device.

9. A safety device as claimed in any one of Claims 1 to 8 in which the inlet support means (14, 24) includes an inlet support ring (14) secured to the flange portion (12) of the disc (8), the internal diameters of the inlet support means (14, 24), the flange portion (12) of the disc (8) and the assembled outlet support means (18, 22, 28), other than the ring member (16) being identical.

10. A safety device as claimed in any one of Claims 1 to 9 in which the reverse buckling disc (8) and the ring member (16) are both of the same material, the thickness of the ring member (16) being within the range $\frac{1}{4}$ to equal that of the disc (8).

## Patentansprüche

1. Sicherheitsvorrichtung für Druckbehälter, bestehend aus einer nach außen ausbeulbaren Scheibe (8) mit einem konkav-konvex-förmingen Kuppelbereich (10), der von einem im wesentlichen ringförmigen Flanschbereich (12) umgeben ist, wobei der Flanschbereich (12) zwischen einer ringförmingen Einlaß- und Auslaß-Stützeinrichtung (14, 24 und 18, 22, 28) derart eingespannt ist, daß die konvexe Seite des Kuppelbereichs (10) mit dem Innendruck des Behälters Beaufschlagt wird, wobei die Auslaß-Stützeinrichtung einen Ring (16) aufweist, dessen Innendurchmesser kleiner ist als der Innendurchmesser des Flanschbereichs (12) der Scheibe (8), so daß ein kreisrunder Bereich (26) des Rings (16) die radial äußeren Bereiche des Kuppelbereichs (10) der Scheibe (8) überdeckt, wobei der kreisrunde Bereich (26) des Rings (16) so angeordnet ist, daß während des Umschnappens des Kuppelbereichs (10) der Scheibe (8) die Bewegung der umschnappenden radial äußeren Bereiche des Kuppelbereichs (10) durch den kreisrunden Bereich (26) des Rings (16) abgebremst wird, dadurch gekennzeichnet, daß der ringförmige Bereich (26) des Rings (16) derart verformbar ist, daß er selbst beim Umschnappen des Kuppelbereichs (10) von diesem aus einer Ausgangsstellung in eine Verformungsstellung verlagert wird.

2. Sicherheitsvorrichtung nach Anspruch 1, dadurch gekennzeichnet, daß die Auslaß-Stützeinrichtung ein Auslaß-Stützbauteil (18) umfaßt, wobei der Ring (16) zwischen dem Auslaß-Stützbauteil (18) und dem Flanschbereich (12) der Scheibe (8) angeordnet ist.

3. Sicherheitsvorrichtung nach Anspruch 2, dadurch gekennzeichnet, daß der Ring (16) am Flanschbereich (12) der Scheibe (8) befestigt ist.

4. Sicherheitsvorrichtung nach Anspruch 1, dadurch gekennzeichnet, daß die Auslaß-Stützeinrichtung (18, 22, 28) ein Auslaß-Stützbauteil (18) und einen Auslaß-Stützring (28) aufweist, der zwischen dem Stützbauteil (18) und dem Flanschbereich (12) der Scheibe (8) angeordnet ist, wobei der Ring (16) zwischen dem Auslaß-Stützring (28) und dem Flanschbereich (12) der Scheibe (8) angeordnet ist.

5. Sicherheitsvorrichtung nach Anspruch 1, dadurch gekennzeichnet, daß die Auslaß-Stützeinrichtung (18, 22, 28) ein Auslaß-Stützbauteil (18) und einen Auslaß-Stützring (28) aufweist, der zwischen dem Auslaß-Stützbauteil (18) und dem Flanschbereich (12) der Scheibe (8) angeordnet ist, wobei der Ring (16) zwischen dem Auslaß-Stützbauteil (18) und dem Auslaß-Stützring (28) angeordnet ist.

6. Sicherheitsvorrichtung nach Anspruch 4 oder 5, dadurch gekennzeichnet, daß der Ring (16) under der Auslaß-Stützring (28) miteinander und mit dem Flanschbereich (12) der Scheibe (8) verbunden sind.

7. Sicherheitsvorrichtung nach einem der Ansprüche 2 bis 6, dadurch gekennzeichnet, daß das Auslaß-Stützbauteil (18) zahlreiche Messerklingen (2) aufweist, um den Kuppelbereich (10) der Scheibe (8) beim Umschnappen zu zerschneiden.

8. Sicherheitsvorrichtung nach Anspruch 7, dadurch gekennzeichnet, daß die Auslaß-Stützeinrichtung (18, 22, 28) ferner ein kreisrundes Haltebauteil (22) aufweist, um das Auslaß-Stützbauteil (18) in der Vorrichtung zu positionieren.

9. Sicherheitsvorrichtung nach einem der Ansprüche 1 bis 8, dadurch gekennzeichnet, daß die Einlaß-Stützeinrichtung (14, 24) einen Einlaß-Stützring (14) aufweist, der am Flanschbereich (12) der Scheibe (8) befestigt ist, wobei die Innendurchmesser der Einlaß-Stützeinrichtung (14, 24), des Flanschbereichs (12) der Scheibe (8) und der zusammengefügten Auslaß-Stützeinrichtung (18, 22, 28) identisch sind, aber vom Innendurchmesser des Rings (16) abweichen.

10. Sicherheitsvorrichtung nach einem der Ansprüche 1 bis 9, dadurch gekennzeichnet, daß die nach außen ausbauchbare Scheibe (8) und der Ring (16) aus dem gleichen Material bestehen, wobei die Dicke des Rings (16) 1/4 bis 1/1 der Dicke der Scheibe (8) beträgt.

## Revendications

1. Dispositif de sécurité pour un récipient sous pression, ledit dispositif comprenant un disque se gauchissant de façon inverse (8) ayant une partie formant dôme concave-convexe (10) entourée d'une partie formant bride annulaire ou sensiblement annulaire (12), ladite partie formant bride (12) étant bloquée entre des moyens annulaires de support d'entrée et de sortie (14, 24 et 18, 22, 28), le côté convexe de ladite partie formant dôme devant être soumis à la pression dans le récipient, le moyen de support de sortie comprenant un organe formant anneau (160 dont le diamètre interne est inférieur au diamètre interne de la partie formant bride (12) du disque (8), ainsi une partie annulaire (26) de l'organe formant anneau (16) recouvre les régions radialement externes de la partie formant dôme (10) due disque (8), ladite partie annulaire (26) dudit organe formant anneau (16) étant placée de façon que, pendant une inversion de ladite partie formant dôme (10) du disque (8), le mouvement de l'inversion des régions radialement externes de ladite partie formant dôme (10) soit retardé par ladite partie annulaire (26) dudit organe formant anneau (16), caractérisé en ce que ladite partie annulaire (26) dudit organe formant anneau est déformable de façon que, pendant ladite inversion de la partie formant dôme (10), ladite partie annulaire (26) de l-organe formant anneau (16) soit elle-même déplacée par la partie formant dôme (10), d'une position de repos à une position déformée.

2. Dispositif de sécurité selon la revendication 1, dans lequel le moyen de support de sortie (18, 22, 28) comprend un organe de support de sortie (18), l'organe formant anneau (16) étant placé entre l'organe de support de sortie (18) et la partie formant bride (12) du disque (8).

3. Dispositif de sécurité selon la revendication 2, dans lequel l'organe formant anneau (16) est fixé à la partie formant bride (12) du disque (8).

4. Dispositif de sécurité selon la revendication 1, dans lequel de moyen de support de sortie (18, 22, 28) comprend un organe de support de sortie (18) et un anneau de support de sortie (28), placé entre ledit organe de support (18) et la partie formant bride (12) du disque (8), l'organe formant anneau (16) étant placé entre l'anneau de support de sortie (28) et la partie formant bride (12) du disque (8).

5. Dispositif de sécurité selon la revendication 1, dans lequel le moyen de support de sortie (18, 22, 28) comprend un organe de support de sortie (18) et un anneau de support de sortie (28) placé entre ledit organe de support (18) et la partie formant bride (12) du disque (8), l'organe formant anneau (16 étant placé entre l'organe de support de sortie (18) et l'anneau de support de sortie (28).

6. Dispositif de sécurité selon la revendication 4 ou la revendication 5, dans lequel l'organe formant anneau (16) et l'anneau de support de sortie (28) sont fixés ensemble et à la partie formant bride (12) du disque (8).

7. Dispositif de sécurité selon l'une quelconque des revendications 2 à 6, dans lequel l'organe de support de sortie (18) comprend un certain nombre de lames de couteau (20) pour rompre la partie formant dôme (10) du disque (8) lors de son inversion.

8. Dispositif de sécurité selon la revendication 7, dans lequel le moyen de support de sortie (18, 22, 28) comprend de plus un organe annulaire de maintien (22) pour localiser l'organe de support de sortie (18) en position dans le dispositif.

9. Dispositif de sécurité selon l'une quelconque des revendications 1 à 8, dans lequel le moyen de support d'entrée (14, 24) comprend un anneau de support d'entrée (14) fixé à la partie formant bride (12) du disque (8), les diamètres internes du moyen de support d'entrée (14, 24), de la partie formant bride (12) du disque (8) et du moyen de support de sortie assemblé (18, 22, 24), autre que l'organe formant anneau (16) étant identiques.

10. Dispositif de sécurité selon l'une quelconque des revendications 1 à 9, dans lequel le disque se gauchissant de façon inverse (8) et l'organe formant anneau (16) sont tous deux du même matériau, l'épaisseur de l'organe formant anneau (16) étant dans une gamme comprise entre un quart et celle due disque (8).

*FIG. 1*

18

20    16

22

2

12    8    10    14

24

*FIG.2*

PRESSURE

6

4

18

16    26    *FIG. 2*

12

14    10

FIG. 3

FIG. 4

FIG. 5